# EUROPÄISCHE PATENTSCHRIFT

(11) **EP 3 282 501 B1**
(45) Veröffentlichungstag und Bekanntmachung des Hinweises auf die Patenterteilung: **13.05.2020**
(21) Anmeldenummer: 16183280.3
(22) Anmeldetag: 08.08.2016
(51) Int. Cl.: H01M 2/20, H01M 2/34

(54) **BATTERIE, BATTERIEMODUL FÜR DIE BATTERIE UND STROMSCHIENE HIERFÜR**
BATTERY, BATTERY MODULE FOR THE BATTERY AND BUS BAR FOR SAME
BATTERIE, ELEMENT DE BATTERIE POUR LA BATTERIE ET BARRETTE DE CONNEXION ASSOCIEE

(43) Veröffentlichungstag der Anmeldung: 14.02.2018
(73) Patentinhaber: Voltlabor GmbH, 4190 Bad Leonfelden (AT)
(72) Erfinder: Jenner-Braunschmied, Edmund, 4180 Zwettl an der Rodl (AT); Reingruber, Martin, 4191 Vorderweißenbach (AT)
(74) Vertreter: Ofner, Clemens

(56) Entgegenhaltungen:
- EP-A1- 2 339 669
- EP-A1- 2 608 243
- DE-A1-102011 007 319
- US-A1- 2010 291 426

## Beschreibung

Die Erfindung betrifft eine Batterie, ein Batteriemodul für die Batterie und eine Stromschiene hierfür zum Verbinden von Batteriezellen, mit einem elektrisch leitenden Metallblech, mit mindestens einem in das Metallblech mit Hilfe eines Trennverfahrens eingebrachten Blechsteg, der einen aus der Blechebene versetzten Kontaktabschnitt zum elektrischen Verbinden mit einem Pol der Batteriezelle, mindestens eine elektrische Schmelzsicherung und einen zwischen Metallblech und Kontaktabschnitt vorgesehenen Aufhängungsabschnitt aufweist, wobei sich der Aufhängungsabschnitt in mindestens zwei elektrisch parallele Schenkelabschnitte teilt.

Stromschienen zum parallelen oder seriellen elektrischen Zusammenschalten von Batteriezellen sind aus dem Stand der Technik bekannt. Solche Stromschienen bedienen sich eines elektrisch leitenden Metallblechs und davon abstehenden Blechstegen, mit denen die Batteriezellen elektrisch verbunden sind. Hierzu weisen die Blechstege einen Kontaktabschnitt auf, der mit einem Pol einer Batteriezelle verschweißt ist. Die Blechstege werden mit Hilfe eines Trennverfahrens in das Metallblech eingebracht, beispielsweise eingeschnitten - was durch Stanzen oder Laserschneiden erfolgen kann.

Zudem ist es bei solchen Blechstegen bekannt (EP2608243A1), diese mit einem Sicherungsabschnitt zu versehen, der eine elektrische Schmelzsicherung am Blechsteg ausbildet und die daran angeschlossene Batteriezelle vor einer sicherheitskritischen Stromstärke schützt. Die Schmelzsicherung wird dabei durch einen speziellen Sicherungsdraht ausgebildet, welcher mit einem elektrisch isolierenden Harz eingebettet wird. Nachteilig vermindert dieser Sicherungsdraht die mechanische Stabilität der Stromschiene und ist zudem vergleichsweise konstruktiv aufwendig.

Die Erfindung hat sich daher ausgehend vom eingangs geschilderten Stand der Technik die Aufgabe gestellt, eine Stromschiene mit einer Schmelzsicherung zu schaffen, die sowohl standfest als auch konstruktiv einfach ausgeführt ist.

Die Erfindung löst die gestellte Aufgabe dadurch, dass die Schmelzsicherung von den beiden elektrisch parallelen Schenkelabschnitten ausgebildet wird.

Wird die Schmelzsicherung von den beiden elektrisch parallelen Schenkelabschnitten ausgebildet, so kann konstruktiv besonders einfach eine Schmelzsicherung an einer Stromschiene vorgesehen werden. Es ist dabei möglich, sowohl auf einen die Stabilität und Langlebigkeit belastenden Einschnürungswiderstand, als auch auf das Vorsehen eines speziellen Sicherungsdrahtes zu verzichten. Zudem kann die durch die beiden Schenkelabschnitte ausgebildete Schmelzsicherung zu einer erhöhten mehrdimensionale Beweglichkeit des Blechstegs führen - womit durch die erfindungsgemäße Vorrichtung Erschütterungen und Vibrationen besonders einfach und sicher aufnehmen kann. Dies kann die Gefahr von mechanischen Leitungsbrüchen verringern und die Standfestigkeit der Stromschiene im Vergleich zum Stand der Technik erhöhen. Zudem kann dieser Verlauf des Sicherungsabschnitts vergleichsweise konstruktiv einfach hergestellt werden - beispielsweise, indem dieser direkt aus dem Blechteil des Metallblechs geformt wird, etwa durch einen Stanzvorgang bzw. durch ein Einschneiden (Schereschneiden/Laserschneiden). Die erfindungsgemäße Stromschiene und der Blechsteg können damit einstückig ausgebildet werden, womit unter anderem eine kostengünstig herzustellende Stromschiene zur Verfügung gestellt werden kann. Weitere Maßnahmen zur Ausführung des Sicherungsabschnitts oder weitere Hilfsmittel zur Erhöhung der mechanischen Belastbarkeit sind demnach nicht erforderlich.

Im Allgemeinen wird festgehalten, dass das Metallblech zur einfachen Herstellbarkeit einen Nickelwerkstoff aufweisen kann. Außerdem kann sich ein Nickelwerkstoff durch seine verbesserte Schweißbarkeit mit einem Pol der Batteriezelle auszeichnen.

Die Ausführung der Schmelzsicherung kann konstruktiv weiter vereinfacht werden, wenn die Innenränder der beiden Schenkelabschnitte zueinander spiegelsymmetrisch verlaufen. Insbesondere kann dadurch eine homogene Aufteilung der fließenden Ströme erfolgen, wodurch ein gleichmäßiges Abschmelzen der Schmelzsicherung gewährleistbar ist.

Liegen die beiden Schenkelabschnitte einander diametral gegenüber, so kann sich die Erfindung durch besonders fertigungstechnische Einfachheit auszeichnen, wodurch eine kostengünstigere Stromschiene geschaffen werden kann.

Eine besonders standfeste Stromschiene kann zudem geschaffen werden, wenn die beiden Schenkelabschnitte, insbesondere kreisbogenförmig oder elliptisch, gekrümmt verlaufen. Dabei können enge Biegeradien in der Schmelzsicherung vermieden - und so eine insgesamt noch standfestere Stromschiene geschaffen werden.

Alternativ können die Schenkelabschnitte rechteckförmig verlaufen. Ausgezeichnete elastische Eigenschaften des Aufhängungsabschnitts können dabei geschaffen werden, wodurch eine besonders hohe Standfestigkeit der Stromschiene erreichbar ist.

Sind die beiden Schenkelabschnitte an diametral gegenüberliegenden Verbindungsstegen mit dem Metallblech und mit dem Kontaktabschnitt verbunden, so kann der Aufhängungsabschnitt federnd axiale Bewegungen zwischen den Batteriezellen und dem Metallblech ausgleichen. Insbesondere Vibrationen oder Stöße können so standfest abgetragen werden. Der Aufhängungsabschnitt ist somit an einem seiner Enden an das Metallblech und an seinem anderen Ende an den Kontaktabschnitt angeschlossen, wodurch eine elektrische Verbindung zwischen Kontaktabschnitt und Metallblech hergestellt wird. Eine besonders standfeste und konstruktiv einfache Stromschiene kann dadurch geschaffen werden.

Die federnde Wirkung des Aufhängungsabschnitts kann weiter erhöht werden, wenn dieser mehrere elektrisch serielle Leitungsabschnitte aus elektrisch parallelen Schenkelabschnitten aufweist. Insbesondere können die seriellen Leitungsabschnitte wiederum über diametral gegenüberliegende Verbindungsstege miteinander verbunden werden, wodurch eine in axialer Richtung ausziehbare Feder geschaffen wird. Der Aufhängungsabschnitt kann somit starken axialen Belastungen (wie Stößen, Biegungen, thermische Ausdehnungen etc.) standhalten - wodurch eine besonders standfeste Stromschiene geschaffen werden kann.

Die Zuverlässigkeit der Stromschiene ist weiter erhöhbar, wenn die Schenkelabschnitte eine Flachfeder ausbilden. Insbesondere wenn die Schenkelabschnitte eine planare Flachfeder ausbilden, kann eine besonders kompakte Stromschiene geschaffen werden, die sich beispielsweise für den Einsatz unter beengten Platzverhältnissen auszeichnet. Durch axiales Auseinanderziehen kann wiederum die Flachfeder etwa vorgespannt werden - und somit ein verbessertes Federverhalten zeigen. Das axiale Auseinanderziehen kann beispielsweise gleichzeitig mit dem elektrischen Kontaktieren oder stoffschlüssigen Fügen des Kontaktabschnitts mit dem Pol der Batteriezelle erfolgen.

Sind die Schenkelabschnitte als Blechstreifen ausgeführt, so ist die Stromschiene auf fertigungstechnisch einfache Weise herstellbar. Die Blechstreifen der Schenkelabschnitte können dabei direkt aus dem Metallblech abgetrennt werden. Zudem können die Blechstreifen für eine ausreichende Leiterbahnbreite zur Führung hoher Ströme sorgen. Auf diese Weise kann außerdem einerseits eine hohe mechanische Stabilität, andererseits eine besonders reaktionsschnelle Schmelzsicherung auf konstruktiv einfache Weise ermöglicht werden.

Die Schmelzsicherung kann eine Kurzschluss-Schmelzsicherung sein, um damit die Folgen sowohl eines internen als auch eines externen Kurzschlusses der an die Stromschiene angeschlossenen Batteriezelle zu begrenzen. Ein interner Kurzschluss der Batteriezelle kann beispielsweise durch eine mechanische Überbelastung der Batteriezelle auftreten. Ein Kurzschlussstrom über die beschädigte Batteriezelle wird durch die erfindungsgemäße Stromschiene standfest verhindert, wodurch andere mit der Stromschiene elektrisch parallel verbundenen Batteriezellen vor einem Versagensfall geschützt werden können. Zudem schützt die erfindungsgemäße Kurzschluss-Schmelzsicherung auch eine intakte Batteriezelle davor, im internen Kurzschlussfall einer anderen über die Stromschiene elektrisch parallel verbundenen Batteriezelle die intakte Batteriezelle zu beschädigen. Es kann daher eine Stromschiene geschaffen werden, die standfest Batteriezellen vor internen und externen Kurzschlüsse an der Stromschiene schützen kann. Dies kann insbesondere bei Batteriemodul von Vorteil sein, bei denen mehrere Batteriezellen elektrisch parallel an einer Stromschiene angeschlossen sind.
Zudem kann im Gegensatz zum Stand der Technik durch die Auslegung der Schmelzsicherung als Kurzschluss-Schmelzsicherung der elektrische Widerstand zwischen Stromschiene und Batteriezelle klein gehalten werden, was nicht nur den Gesamtwiederstand im Hauptstrompfad vorteilhaft gering hält, sondern auch beim Entladen bzw. Laden für einen guten Spannungsausgleich zwischen den parallelen Batteriezellen sorgen kann.

Die erfindungsgemäße Stromschiene kann sich besonders für ein Batteriemodul mit mehreren Batteriezellen eignen, bei welchem die Stromschiene mit ihren Blechstegen mit je einem Pol einer Batteriezelle verbunden ist.

Im Allgemeinen wird festgehalten, dass eine besonders standfeste Kontaktierung zwischen Stromschiene und dem Pol der Batteriezelle ermöglicht werden kann, wenn der Kontaktabschnitt des Blechstegs mit dem Pol der Batteriezelle stoffschlüssig verbunden ist. Beispielsweise kann diese stoffschlüssige Verbindung durch ein Verschweißen, insbesondere Punkt oder Laserschweißen, erfolgen.

Vorteilhaft können mehrere elektrisch miteinander verbundene erfindungsgemäße Batteriemodule eine Batterie ergeben.

In den Figuren ist beispielsweise der Erfindungsgegenstand anhand einer Ausführungsvariante näher dargestellt. Es zeigen
- Fig. 1: eine Querschnittsansicht durch ein Batteriemodul,
- Fig. 2: Detailansichten auf unterschiedliche erfindungsgemäße Stromschienen,
- Fig. 3: eine Draufsicht auf die Stromschiene eines Batteriemoduls,
- Fig. 4: eine Querschnittsansicht auf eine weitere Ausführungsart des erfindungsgemäßen Batteriemoduls und
- Fig. 5: eine Draufsicht auf die Stromschiene des Batteriemoduls aus Fig. 4.

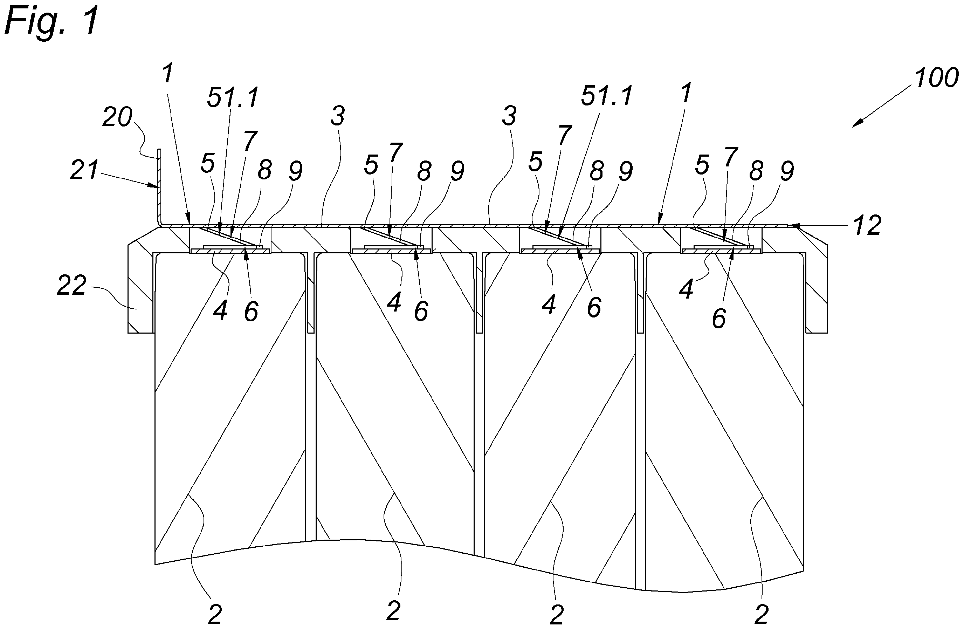

Nach Fig. 1 ist beispielsweise eine erfindungsgemäße Stromschiene 1 zum Verbinden von Batteriezellen 2 gezeigt. Die Stromschiene 1 ist dabei als Metallblech 3, nämlich Nickelblech, ausgeführt, um eine elektrisch leitende Verbindung zwischen den Polen 4 der Batteriezellen 2 herzustellen. Dafür weist das Metallblech 3 einen Blechsteg 5 auf, der hierfür durch ein Trennverfahren (wie etwa Stanzen bzw. Einschneiden (Scherschneiden) oder Laserschneiden) aus dem Metallblech 3 eingebracht und dann axial bzw. normal zur Blechebene 12 auseinandergezogen wird. Dieses axiale Auseinanderziehen kann beispielsweise gleichzeitig mit dem elektrischen Kontaktieren oder stoffschlüssigen Fügen des Blechstegs 5 mit einem Pol 4 einer Batteriezelle 2 erfolgen.
Dadurch weist der Blechsteg 5 einen aus der Blechebene 12 des Metallblechs 3 versetzten Kontaktabschnitt 6 auf, welcher die elektrische Verbindung zwischen Stromschiene 1 und dem jeweiligen Pol 4 der Batteriezellen 2 ausbildet.
Der Blechsteg 5 weist weiters zwischen dem Metallblech 3 und dem Kontaktabschnitt 6 einen Aufhängungsabschnitt 7 auf, der aus zwei oder mehreren elektrisch parallel miteinander verbundenen Schenkelabschnitte 51.1 und 51.2 bzw. 52.1 und 52.2 besteht und seitlich des Kontaktabschnitts 6 verlaufen.

Erfindungsgemäß bilden diese Schenkelabschnitte 51.1 und 51.2 bzw. 52.1 und 52.2 gemeinsam eine Schmelzsicherung 8 aus, um die Batteriezelle 2 im Fehlerfall von der Stromschiene 1 zu trennen. Die Schenkelabschnitte 51.1, 51.2, 52.1, 52.2 stellen also die einzige elektrische Verbindung zwischen dem Pol 4 der Batteriezelle 2 und der Stromschiene 1 her, die im Fehlerfall elektrisch unterbrochen wird.
Ein im Fehlerfall der Batteriezelle 2 auftretender Kurzschluss kann somit standfest von der Schmelzsicherung 8 verhindert werden - wodurch nicht nur die restlichen Batteriezellen 2 geschützt werden können sondern auch ein eventueller Kurzschluss samt Überhitzung der elektrisch parallelen Batteriezellen 2 verhindert wird.

Die Schenkelabschnitte 51.1, 52.1 sind vorzugsweise als Blechstreifen 11 ausgeführt, welche aus dem Metallblech 3, etwa durch Stanzen, herausgetrennt wurden - wodurch diese einstückig in den Kontaktabschnitt 6 bzw. in die Stromschiene 1 übergehen. Insbesondere hat dieser Blechstreifen 11 über seine gesamte Länge eine konstante Breite, um die Schmelzsicherung 8 reproduzierbar gestalten zu können. Eine derartige Ausführung kann somit auf das Zufügen von strukturellen Bauteilen sowie von Schmelzsicherungsdrähten verzichten und eine konstruktiv besonders einfache und damit kostengünstige Stromschiene 1 schaffen. Zudem kann die erfindungsgemäße Stromschiene 1 mechanische Belastungen, insbesondere Schwingungen in axialer Richtung der Batteriezellen 2, federnd abtragen, da ein Einschnürungswiderstand, wie dieser bei Schmelzsicherungen im Stand der Technik zur Verwendung kommt, vermeidbar ist. Eine besonders standfeste Stromschiene 1 ist damit geschaffen.

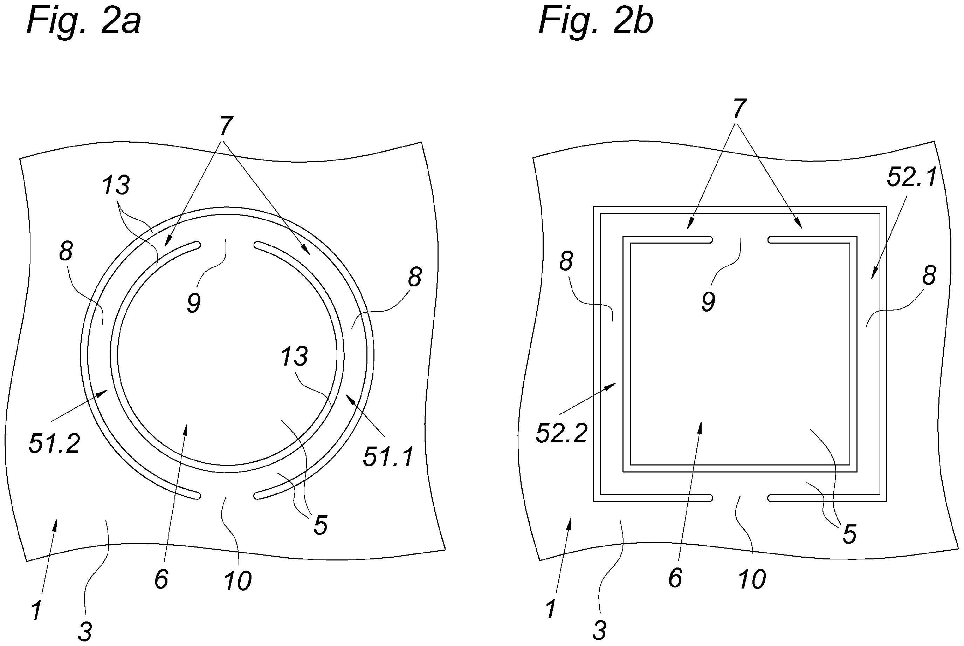

Wie in den Fig. 2a und 2b weiter erkannt werden kann, verlaufen die Innenränder der Schenkelabschnitte 51.1, 51.2, 52.1, 52.2 jeweils zueinander spiegelsymmetrisch um den Kontaktabschnitt 6. Eine homogene Stromführung durch die Schenkelabschnitte 51.1, 51.2, 52.1, 52.2 kann damit erreicht werden, wodurch ein Stromteiler in der Schmelzsicherung 8 vermieden wird, welcher zu einer Überbelastung eines Schenkelabschnitts 51.1, 51.2, 52.1, 52.2 führen würde. Zudem liegen die Schenkelabschnitte 51.1, 51.2 bzw. 52.1, 52.2 jeweils einander diametral gegenüber und sind dabei in ihrer Form als kreisbogenförmige (oder elliptische) Schenkelabschnitte 51.1, 51.2 oder als rechteckförmige Schenkelabschnitte 52.1, 52.2 ausgeführt.

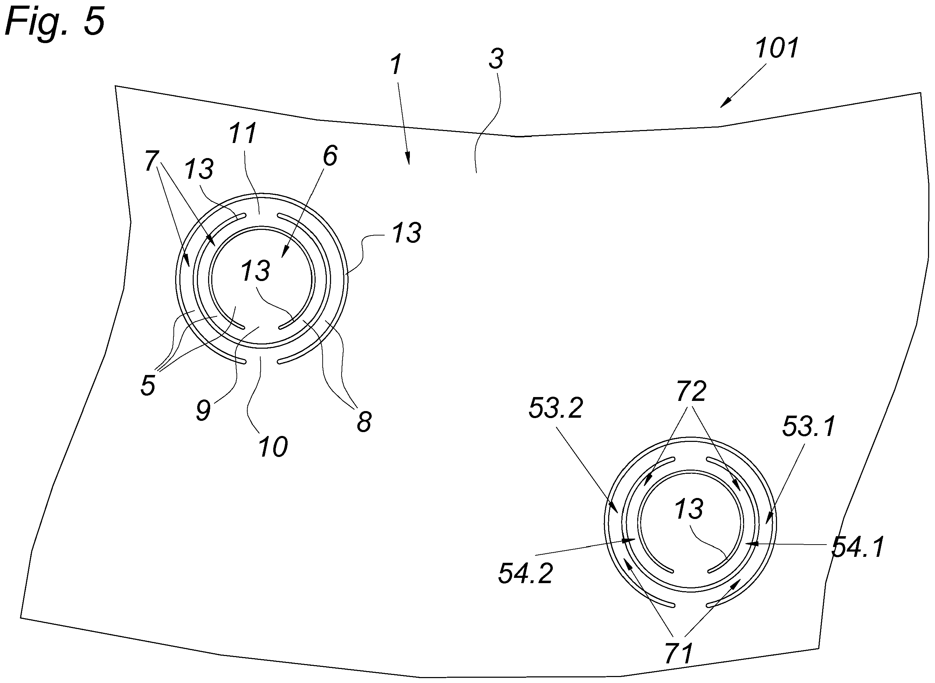

In Fig. 5 ist eine weitere Ausführungsform gezeigt, wobei der Aufhängungsabschnitt 7 mehrere elektrisch in Serie miteinander verbundene Leitungsabschnitte 71, 72 aus jeweils elektrisch parallel verbundenen Schenkelabschnitten 53.1, 53.2 (im Leitungsabschnitt 71) und 54.1, 54.2 (im Leitungsabschnitt 72) aufweist. Dieser aus mehreren Leitungsabschnitten 71, 72 bestehende Aufhängungsabschnitt 7 kann vorteilhafter eine höhere Beweglichkeit des gesamten Blechstegs 5 ermöglichen und somit auch Bewegungen der Batteriezellen 2 außerhalb ihrer axialen Richtung standfest abfedern. Eine mehrdimensionale Beweglichkeit des Aufhängungsabschnitts 7 kann somit erreicht werden, wodurch eine besonders standfeste Stromschiene 1 verfügbar ist.
Die Schenkelabschnitte 51.1 und 51.2, 52.1 u. 52.2 und 53.1 u. 53.2 sind jeweils über einen Verbindungssteg 9 mit dem Kontaktabschnitt 6 verbunden. Die Schenkelabschnitte 51.1 und 51.2, 52.1 u. 52.2 sowie 54.1 u. 54.2 sind über einen Verbindungssteg 10 mit dem Metallblech 3 der Stromschiene 1 verbunden. Die Schenkelabschnitte 53.1 und 53.2 sind ebenfalls über einen Verbindungssteg 11 mit den Schenkelabschnitten 54.1 u. 54.2 verbunden. Diese Verbindungsstege 9, 10, 11 fungieren zugleich als federnde Gelenke, wodurch ein federnder Effekt des Aufhängungsabschnitts 7 erreichbar ist. Insbesondere bilden die Schenkelabschnitte 51.1, 51.2, 52.1, 52.2, 53.1, 53.2, 54.1, 54.2 in Verbindung mit den Verbindungsstegen 9, 10, 11 eine Flachfeder aus, welche in axialer Richtung der Batteriezellen 2 ausgelenkt werden kann.

Die Schenkelabschnitte 51.1, 51.2, 52.1, 52.2, 53.1, 53.2, 54.1, 54.2 sind vorzugsweise als Blechstreifen ausgeführt, die aus dem Metallblech 3, etwa durch Stanzen, herausgetrennt wurden, wodurch diese einstückig in den Kontaktabschnitt 6 bzw. in die Stromschiene 1 übergehen. Insbesondere hat dieser Blechstreifen über seine gesamte Länge eine konstante Breite, um die Schmelzsicherung 8 reproduzierbar gestalten zu können.

Der Aufhängungsabschnitt 7 ist als elektrische Schmelzsicherung 8 ausgeführt, nämlich als Kurzschluss-Schmelzsicherung 8, die durch einen Überstrom zur Batteriezelle 2 oder von der Batteriezelle 2 ausgelöst wird und damit die betroffene Batteriezelle 2 von der Stromschiene 1 trennt

In Fig. 1 ist eine Querschnittsansicht auf ein Batteriemodul 100 gezeigt, in welchem mehrere Batteriezellen 2 mit einer erfindungsgemäßen Stromschiene 1 elektrisch verbunden sind. Die elektrische Verbindung wird dabei jeweils zwischen dem Pol 4 einer Batteriezelle 2 und dem Kontaktabschnitt 6 des jeweiligen zur Batteriezelle 2 zugehörenden Blechstegs 5 hergestellt. Die Batteriezellen 2 sind dabei in dem Batteriemodul 100 nebeneinander angeordnet und gleichgepolt ausgerichtet, also elektrisch parallel geschaltet. Die Batteriezellen 2 können zudem durch einen Batterierahmen 22 in ihrer Position gehalten werden.

Die Kontaktabschnitte 6 der jeweiligen Blechstege 5 sind stoffschlüssig mit dem zugehörigen Pol 4 der Batteriezelle 2 verbunden, um einen geringen Kontaktwiderstand zu garantieren und eine standfeste Verbindung zu gewährleisten. Diese stoffschlüssige Verbindung wird - unter anderem, weil kostengünstig herzustellen - insbesondere durch einen oder mehrere Schweißpunkte erzeugt.

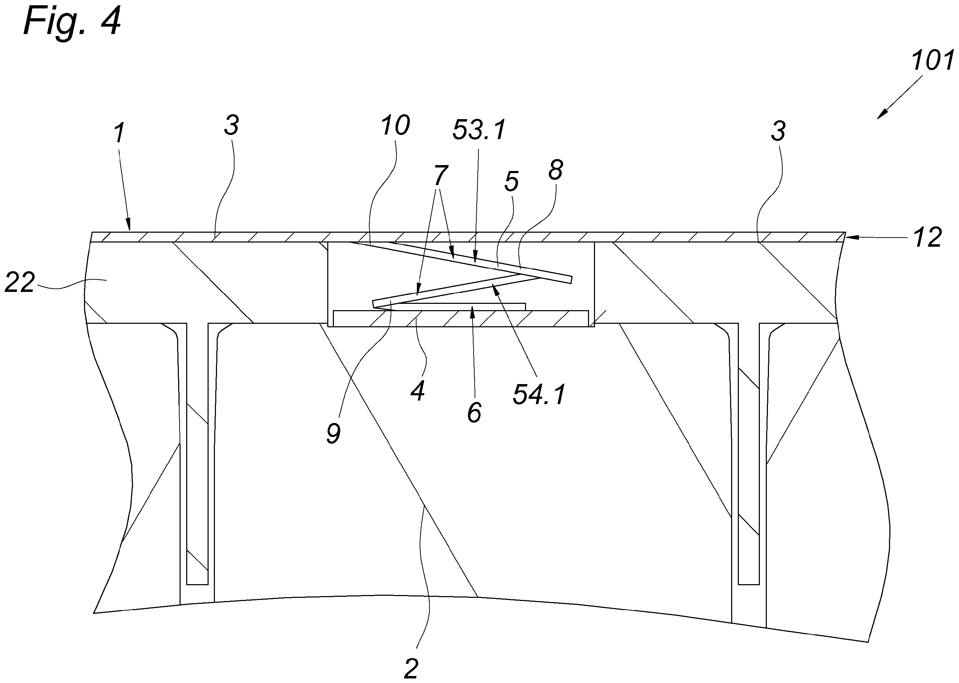

Ein Batteriemodul 101 mit einer Stromschiene 1 aufweisend Aufhängungsabschnitte 7 mit jeweils zwei elektrisch in Serie verbundenen Leitungsabschnitten 71, 72 ist in Fig. 4 gezeigt. Fig. 5 zeigt eine Draufsicht auf ebendieses Batteriemodul 101.

Mehrere erfindungsgemäße Batteriemodule 100, 101 können so zu einer Batterie zusammengeschaltet werden. Dabei kann die gewünschte Spannung und Kapazität bzw. Leistung der Batterie durch Parallel- und Seriell-Schaltung der Batteriemodule 100, 101 eingestellt werden. Dies wurde in den Figuren jedoch nicht weiter dargestellt.

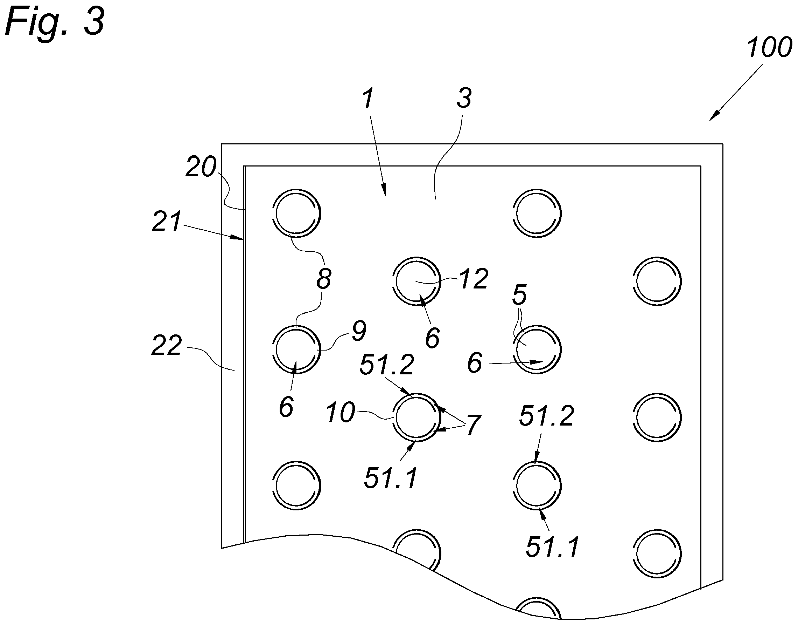

Im Allgemeinen wird erwähnt, dass der Blechsteg 5 in das Metallblech 3 eingeschnitten wird, wodurch die jeweiligen Ränder des Blechstegs 5, die sich am Metallblech 3, Aufhängungsabschnitt 7 und am Kontaktabschnitts 6 ergeben, der jeweiligen Schnittlinie 13 folgen, wie dies beispielsweise im Detail in den Figuren 2 und 3 zu erkennen ist.

## Patentansprüche

1. Stromschiene zum Verbinden von Batteriezellen (2), aus einem elektrisch leitenden Metallblech (3), mit mindestens einem in das Metallblech (3) mit Hilfe eines Trennverfahrens eingebrachten und damit einstückig übergehenden Blechsteg (5), der einen aus der Blechebene (12) versetzten Kontaktabschnitt (6) zum elektrischen Verbinden mit einem Pol (4) der Batteriezelle (2), mindestens eine elektrische Schmelzsicherung (8) und einen zwischen Metallblech (3) und Kontaktabschnitt (6) vorgesehenen Aufhängungsabschnitt (7) aufweist, wobei sich der Aufhängungsabschnitt (7) in mindestens zwei elektrisch parallele Schenkelabschnitte (51.1, 51.2; 52.1, 52.2; 53.1, 53.2; 54.1, 54.2) teilt, **dadurch gekennzeichnet, dass** die Schmelzsicherung (8) von den beiden elektrisch parallelen Schenkelabschnitten (51.1, 51.2; 52.1, 52.2; 53.1, 53.2; 54.1, 54.2) ausgebildet wird.

2. Stromschiene nach Anspruch 1, **dadurch gekennzeichnet, dass** die Innenränder der beiden Schenkelabschnitte (51.1, 51.2; 52.1, 52.2; 53.1, 53.2; 54.1, 54.2) zueinander spiegelsymmetrisch verlaufen.

3. Stromschiene nach Anspruch 1 oder 2, **dadurch gekennzeichnet, dass** die beiden Schenkelabschnitte (51.1, 51.2; 52.1, 52.2; 53.1, 53.2; 54.1, 54.2) einander diametral gegenüberliegen.

4. Stromschiene nach Anspruch 1,2 oder 3, **dadurch gekennzeichnet, dass** beide Schenkelabschnitte (51.1, 51.2; 53.1, 53.2; 54.1, 54.2), insbesondere kreisbogenförmig oder elliptisch, gekrümmt verlaufen.

5. Stromschiene nach Anspruch 1, 2 oder 3, **dadurch gekennzeichnet, dass** die Schenkelabschnitte (52.1, 52.2) rechteckförmig verlaufen.

6. Stromschiene nach einem der Ansprüche 1 bis 5, **dadurch gekennzeichnet, dass** die beiden Schenkelabschnitte (51.1, 51.2; 52.1, 52.2; 53.1, 53.2; 54.1, 54.2) an diametral gegenüberliegenden Verbindungsstegen (9, 10) mit dem Metallblech (3) und mit dem Kontaktabschnitt (6) verbunden sind.

7. Stromschiene nach einem der Ansprüche 1 bis 6, **dadurch gekennzeichnet, dass** der Aufhängungsabschnitt (7) mehrere elektrisch serielle Leitungsabschnitte (71, 72) aus elektrisch parallelen Schenkelabschnitten (53.1, 53.2; 54.1, 54.2) aufweist.

8. Stromschiene nach einem der Ansprüche 1 bis 7, **dadurch gekennzeichnet, dass** die Schenkelabschnitte (51.1, 51.2; 52.1, 52.2; 53.1, 53.2; 54.1, 54.2) eine Flachfeder ausbilden.

9. Stromschiene nach einem der Ansprüche 1 bis 8, **dadurch gekennzeichnet, dass** die Schenkelabschnitte (51.1, 51.2; 52.1, 52.2; 53.1, 53.2; 54.1, 54.2) als Blechstreifen ausgeführt sind.

10. Stromschiene nach einem der Ansprüche 1 bis 9, **dadurch gekennzeichnet, dass** Schmelzsicherung (8) eine Kurzschluss-Schmelzsicherung (8) ist.

11. Batteriemodul mit mehreren Batteriezellen (2) und mit einer Stromschiene (1) nach einem der Ansprüche 1 bis 10, wobei die Stromschiene (1) mit ihren Blechstegen (5) mit je einem Pol (4) einer Batteriezelle (2) verbunden ist.

12. Batterie mit mehreren elektrisch miteinander verbundenen Batteriemodulen (100, 101) nach Anspruch 11.

## Claims

1. A bus bar for connecting battery cells (2), made up of an electrically conductive sheet metal (3), having at least one sheet-metal web (5) which is inserted into the sheet metal (3) by means of a separation method and thus transitions into it in one piece, said sheet-metal web (5) comprising a contact section (6) that is offset out from a sheet plane (12) for electrically connecting to a pole (4) of the battery cell (2), at least one electrical fuse (8) and a suspension section (7) provided between the sheet metal (3) and the contact section (6), wherein the suspension section (7) is divided into at least two electrically parallel leg sections (51.1, 51.2; 52.1, 52.2; 53.1, 53.2; 54.1, 54.2), **characterized in that** the fuse (8) is formed by the two electrically parallel leg sections (51.1, 51.2; 52.1, 52.2; 53.1, 53.2; 54.1, 54.2).

2. The bus bar according to claim 1, **characterized in that** the inner edges of the two leg sections (51.1, 51.2; 52.1, 52.2; 53.1, 53.2; 54.1, 54.2) extend in a mirror symmetrical manner relative to one another.

3. The bus bar according to claim 1 or 2, **characterized in that** the two leg sections (51.1, 51.2; 52.1, 52.2; 53.1, 53.2; 54.1, 54.2) are diametrically opposed to one another.

4. The bus bar according to claim 1, 2 or 3, **characterized in that** both leg sections (51.1, 51.2; 53.1, 53.2; 54.1, 54.2) extend in a curve, in particular in the shape of a circular arc or of an elliptical curve.

5. The bus bar according to claim 1,2 or 3, **characterized in that** the leg sections (52.1, 52.2) extend in the shape of a rectangle.

6. The bus bar according to one of claims 1 to 5, **characterized in that** the two leg sections (51.1, 51.2; 52.1, 52.2; 53.1, 53.2; 54.1, 54.2) are connected to the sheet metal (3) and to the contact section (6) at diametrically opposed connecting webs (9, 10).

7. The bus bar according to one of claims 1 to 6, **characterized in that** the suspension section (7) comprises several electrically serial line segments (71, 72) made up of electrically parallel leg sections (53.1, 53.2; 54.1, 54.2).

8. The bus bar according to one of claims 1 to 7, **characterized in that** the leg sections (51.1, 51.2; 52.1, 52.2; 53.1, 53.2; 54.1, 54.2) form a flat spring.

9. The bus bar according to one of claims 1 to 8, **characterized in that** the leg sections (51.1, 51.2; 52.1, 52.2; 53.1, 53.2; 54.1, 54.2) are designed as sheet metal strips.

10. The bus bar according to one of claims 1 to 9, **characterized in that** the fuse (8) is a short circuit fuse (8).

11. A battery module having several battery cells (2) and having a bus bar (1) according to one of claims 1 to 10, wherein the bus bar (1) with each one of its sheet-metal webs (5) is connected to one pole (4) of a battery cell (2).

12. A battery having several battery modules (100, 101) according to claim 11 that are electrically connected to one another.

## Revendications

1. Barre omnibus destinée à raccorder des éléments de batterie (2), composée d'une tôle métallique (3) électriquement conductrice, avec au moins une barrette en tôle (5), laquelle est introduite dans la tôle métallique (3) à l'aide d'un procédé de séparation, se fond en une seule pièce avec celle-ci et comporte un tronçon de contact (6) décalé à partir du plan de tôle (12) pour le raccordement électrique à un pôle (4) de l'élément de batterie (2), au moins un coupe-circuit à fusible (8) électrique et un tronçon de suspension (7) prévu entre la tôle métallique (3) et le tronçon de contact (6), le tronçon de suspension (7) se séparant en au moins deux tronçons de branche (51.1, 51.2 ; 52.1, 52.2 ; 53.1, 53.2 ; 54.1, 54.2) électriquement parallèles, **caractérisée en ce que** le coupe-circuit à fusible (8) est constitué des deux tronçons de branche (51.1, 51.2 ; 52.1, 52.2 ; 53.1, 53.2 ; 54.1, 54.2) électriquement parallèles.

2. Barre omnibus selon la revendication 1, **caractérisée en ce que** les bords intérieurs des deux tronçons de branche (51.1, 51.2 ; 52.1, 52.2; 53.1, 53.2; 54.1, 54.2) sont disposés en symétrie miroir l'un par rapport à l'autre.

3. Barre omnibus selon la revendication 1 ou 2, **caractérisée en ce que** les deux tronçons de branche (51.1, 51.2; 52.1, 52.2; 53.1, 53.2; 54.1, 54.2) sont diamétralement opposés l'un par rapport à l'autre.

4. Barre omnibus selon la revendication 1,2 ou 3, **caractérisée en ce que** les deux tronçons de branche (51.1, 51.2; 53.1, 53.2; 54.1, 54.2) sont courbés, en particulier en forme d'arc de cercle ou elliptique.

5. Barre omnibus selon la revendication 1,2 ou 3, **caractérisée en ce que** les tronçons de branche (52.1, 52.2) sont de forme rectangulaire.

6. Barre omnibus selon l'une des revendications 1 à 5, **caractérisée en ce que**, sur des barrettes de raccordement (9, 10) diamétralement opposées, les deux tronçons de branche (51.1, 51.2 ; 52.1, 52.2 ; 53.1, 53.2 ; 54.1, 54.2) sont raccordés à la tôle métallique (3) et au tronçon de contact (6).

7. Barre omnibus selon l'une des revendications 1 à 6, **caractérisée en ce que** le tronçon de suspension (7) comporte plusieurs tronçons de ligne (71, 72), électriquement en série, composés de tronçons de branche (53.1, 53.2 ; 54.1, 54.2) électriquement parallèles.

8. Barre omnibus selon l'une des revendications 1 à 7, **caractérisée en ce que** les tronçons de branche (51.1, 51.2; 52.1, 52.2; 53.1, 53.2; 54.1, 54.2) constituent un ressort plat.

9. Barre omnibus selon l'une des revendications 1 à 8, **caractérisée en ce que** les tronçons de branche (51.1, 51.2; 52.1, 52.2; 53.1, 53.2; 54.1, 54.2) sont réalisés en tant que bandes de tôle.

10. Barre omnibus selon l'une des revendications 1 à 9, **caractérisée en ce que** le coupe-circuit à fusible (8) est un coupe-circuit à fusible de court-circuit (8).

11. Module de batterie avec plusieurs éléments de batterie (2) et avec une barre omnibus (1) selon l'une des revendications 1 à 10, la barre omnibus (1) étant, par ses barrettes en tôle (5), raccordée respectivement à un pôle (4) d'un élément de batterie (2).

12. Batterie avec plusieurs modules de batterie (100, 101) raccordés électriquement entre eux, selon la revendication 11.
